# EUROPEAN PATENT APPLICATION

(11) **EP 2 818 975 A1**
(43) Date of publication of application: **31.12.2014**
(21) Application number: 14167784.9
(22) Date of filing: 09.05.2014
(51) Int. Cl.: G06F 3/01, G06F 3/041

(54) **Electronic device**

(30) Priority: 27.06.2013 JP 2013135514
(71) Applicant: Fujitsu Limited, Kawasaki-shi, Kanagawa 211-8588 (JP)
(72) Inventor: Koike, Hideyuki, Kawasaki-shi, Kanagawa 211-8588 (JP); Kashiwagi, Susumu, Kawasaki-shi, Kanagawa 211-8588 (JP); Miura, Masaki, Kawasaki-shi, Kanagawa 211-8588 (JP)
(74) Representative: Lewin, David Nicholas

(57) **Abstract**

An electronic device (10) includes a touch panel (12), a pressure sensor (13) that detects pressure applied to the touch panel (12), a vibrator (14) and a processor (11), wherein, at the time point at which the pressure becomes less than a threshold during a decrease in the pressure, the processor (11) operates the vibrator (14) when the processor (11) determines that a touch is being performed on the touch panel (12), and the processor (11) does not operate the vibrator (14) when the processor (11) determines that a touch is not being performed on the touch panel (12).

## Description

### FIELD

The embodiments discussed herein are related to an electronic device.

### BACKGROUND

In recent years, smart phones are becoming widely used instead of conventional mobile phones (hereinafter, sometimes referred to as "old model mobile phones") that include hardware button keys (hereinafter, sometimes simply referred to as "button keys"), such as mechanical numeric keypads. With an old model mobile phone, input operations are performed by button keys being pressed by a user's finger. Consequently, with the old model mobile phone, the fact that a button key has been pressed can be perceived, by way of a click feeling or the like, by a user as a feeling of a touch (hereinafter, referred to as a "touch feeling"). In contrast, a touch panel provided on the surface of a smart phone is usually used for input operations performed on the smart phone. For example, with a smart phone, because no mechanical keyboard is provided, input operations are performed by using software keyboards displayed on the touch panel instead of the mechanical keyboard. Consequently, with input operations performed on typical smart phones, the touch feeling like that obtained from old model mobile phones is not able to be perceived by users.

However, some users, in particular, elderly persons, who familiarize old model mobile phones, when they change mobile terminals to be used from old model mobile phones to smart phones, many users request the operation feeling that was able to be obtained from the old model mobile phones even for input operations performed on the smart phones.

To meet this request, there is a technology, as a first related-art, that vibrates a vibrator provided with a smart phone when the pressing amount of a touch panel reaches a predetermined value and that reports a user of the vibration as a pseudo touch feeling.

Furthermore, there is a smart phone, as a second related-art, that further generates, in order to make a touch feeling of a touch panel similar to a click feeling of button keys, a second vibration after a first vibration is generated. With this smart phone, a first vibration is generated when the pressing amount of a touch panel, i.e., the pressure applied to the touch panel, is increased and reaches a value equal to or greater than a predetermined value. Then, a second vibration is generated when the pressing amount is decreased in accordance with a finger being released from the touch panel and becomes less than the predetermined value. Specifically, the first vibration is generated when the touch panel becomes curved in a concave shape due to the touch and the second vibration is generated when the touch panel returns to the original flat surface from the concave shape.

Related-art example is described, for example, in Japanese Laid-open Patent Publication No. 2011-054025

However, with the second related-art, when a finger is rapidly released from a touch panel at high speed, the speed when the touch panel, which becomes curved in a concave shape due to the touch, returns to the original flat surface may sometimes not be able to follow the speed when a finger is released. Consequently, there may sometimes be a case in which the second vibration is generated after the finger has been released from the touch panel and that second vibration is not transmitted to the finger that has performed the touch operation, however, that second vibration is transmitted to the palm that holds the smart phone. In contrast, with button keys, when a finger is rapidly released from a button key at high speed, the click feeling is not transmitted to the finger and the palm. Consequently, when the second vibration is generated after the finger has been released from the touch panel, an unnatural operation feeling that is different from that obtained from the button key is given to a user. Consequently, regarding the touch panel operation, some users who desire the same operation feeling as that obtained from the button keys feel uncomfortable.

Accordingly, it is an object in one aspect of an embodiment of the invention to give a user an operation feeling of a touch panel with less discomfort compared with the operation feeling of button keys at the time of the touch panel operation.

### SUMMARY

According to an aspect of an embodiment, an electronic device includes a touch panel, a pressure sensor that detects pressure applied to the touch panel, a vibrator and a processor, wherein, at the time point at which the pressure becomes less than a threshold during a decrease in the pressure, the processor operates the vibrator when the processor determines that a touch is being performed on the touch panel, and the processor does not operate the vibrator when the processor determines that a touch is not being performed on the touch panel.

### BRIEF DESCRIPTION OF DRAWINGS

FIG. 1 is a schematic diagram illustrating an example of the hardware configuration of a mobile terminal according to a first embodiment;
FIG. 2 is a schematic diagram illustrating an example of a display of the mobile terminal according to the first embodiment;
FIG. 3 is a schematic diagram illustrating the operation of the mobile terminal according to the first embodiment;
FIG. 4 is a schematic diagram illustrating the operation of the mobile terminal according to the first embodiment;
FIG. 5 is a flowchart illustrating the flow of a process performed by the mobile terminal according to the first embodiment;
FIG. 6 is a schematic diagram illustrating the operation of a mobile terminal according to a second embodiment;
FIG. 7 is a schematic diagram illustrating the operation of the mobile terminal according to the second embodiment; and
FIG. 8 is a flowchart illustrating the flow of a process performed by the mobile terminal according to the second embodiment.

### DESCRIPTION OF EMBODIMENTS

Preferred embodiments of the present invention will be explained with reference to accompanying drawings. The electronic device and the control program disclosed in the present invention are not limited to these embodiments. Furthermore, in the embodiments described below, components having the same function are assigned the same reference numerals and descriptions of such components will be omitted.

Furthermore, in the following, a description will be given of a mobile terminal as an example of an electronic device disclosed in the present invention. However, the electronic device disclosed in the present invention is not limited to the mobile terminal. For example, the electronic device disclosed in the present invention may also be a desktop electronic device, such as an automated teller machine (ATM) that includes a touch panel, a ticket machine that includes a touch panel, or the like.

### [a] First Embodiment

### <Hardware configuration of the mobile terminal>

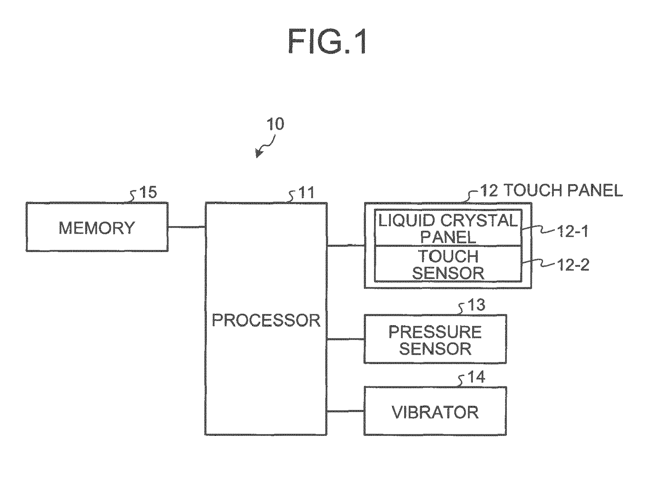

FIG. 1 is a schematic diagram illustrating an example of the hardware configuration of a mobile terminal according to a first embodiment. In FIG. 1, a mobile terminal 10 includes a processor 11, a touch panel 12, a pressure sensor 13, a vibrator 14, and a memory 15. Examples of the mobile terminal 10 include a smart phone, a tablet device, or the like.

The processor 11 performs various processes on the mobile terminal 10. In particular, the processor 11 performs various kinds of control on the touch panel 12 in accordance with an input operation and also controls the operation of the vibrator 14 in accordance with pressure detected by the pressure sensor 13. Examples of the processor 11 include a central processing unit (CPU), a digital signal processor (DSP), a field programmable gate array (FPGA), or the like.

The touch panel 12 includes a liquid crystal panel 12-1 and a touch sensor 12-2 and is attached to the surface of the mobile terminal 10. The liquid crystal panel 12-1 displays various kinds of information. The touch sensor 12-2 receives an input operation by detecting a touch performed on the touch panel 12. The touch panel 12 is, for example, a capacitance touch panel.

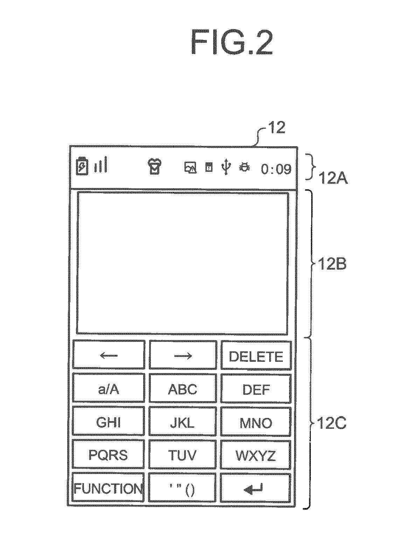

Furthermore, for example, the touch panel 12 displays the character input screen illustrated in FIG. 2. FIG. 2 is a schematic diagram illustrating an example of a display of the mobile terminal according to the first embodiment. The character input screen illustrated in FIG. 2 is divided into three areas, i.e., 12A, 12B, and 12C. In the area 12A, the status of the mobile terminal 10 is displayed; in the area 12B, the characters that are input by a user are displayed; in the area 12C, keyboards are displayed. In this example, a ten key pad for Japanese kana characters is illustrated as an example of the keyboards. A user can input characters by pressing each of the keys of the keyboard displayed on the area 12C.

The pressure sensor 13 detects pressure applied to the touch panel 12. The pressure sensor 13 is, for example, a capacitance pressure sensor.

The vibrator 14 vibrates in accordance with the control performed by the processor 11. The vibrator 14 is, for example, an electromagnet, a motor, a piezoelectric element, or the like.

The memory 15 stores therein various programs, various thresholds, and the like. Examples of the memory 15 include a random access memory (RAM), such as a synchronous dynamic random access memory (SDRAM), or a read only memory (ROM), a flash memory, and the like.

### <Operation of the mobile terminal>

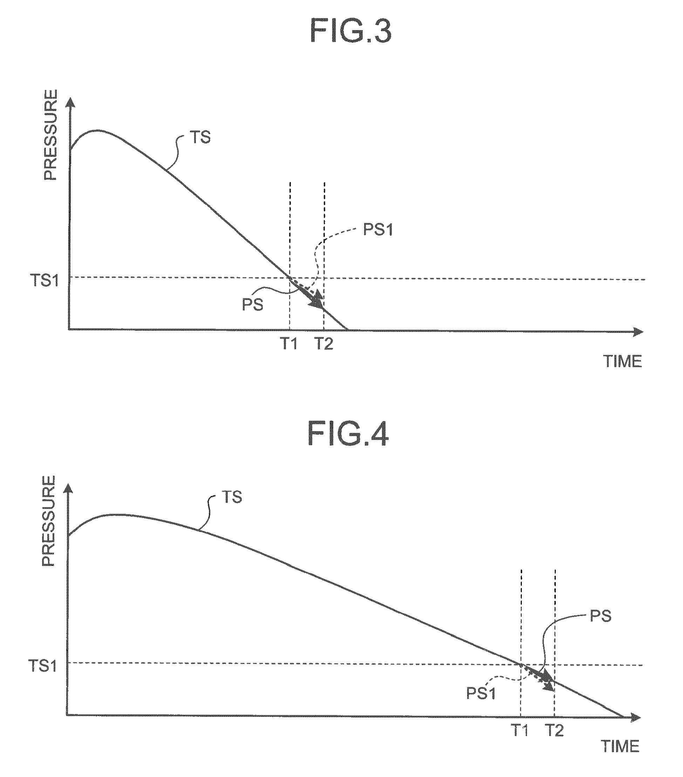

FIGS. 3 and 4 are schematic diagrams each illustrating the operation of the mobile terminal according to the first embodiment. FIG. 3 illustrates the operation of a case in which a user's finger is rapidly released from the touch panel 12 at high speed. FIG. 4 illustrates the operation of a case in which a user's finger is sluggishly released from the touch panel 12 at low speed. Accordingly, in FIG. 4, when compared with the diagram illustrated in FIG. 3, the pressure TS applied to the touch panel 12 is decreased with a gentle curve. Furthermore, in FIGS. 3 and 4, "TS1" indicates a "threshold of pressure" and "PS1" indicates a "threshold of a differential coefficient".

As illustrated in FIGS. 3 and 4, the pressure sensor 13 monitors the pressure applied to the touch panel 12; detects the pressure TS that is decreased in accordance with the release of a finger from the touch panel 12; and outputs the detection result to the processor 11. The processor 11 obtains, at the time point T1 at which the pressure TS is less than the threshold TS1 during a decrease in the pressure TS, a differential coefficient PS of the pressure TS at the time point T1. The differential coefficient PS corresponds to the reduction rate per unit time (T1 to T2) of the pressure TS. Specifically, during the decrease in the pressure TS, as the absolute value |PS| of the differential coefficient PS increases, the reduction rate per unit time of the pressure TS is increased and the pressure TS is rapidly decreased.

Consequently, as illustrated in FIG. 3, when the absolute value |PS| is equal to or greater than the absolute value |PS1| at the time point T1, the processor 11 determines that a touch is not being performed on the touch panel 12 at the time T1 due to a rapid release of a finger from the touch panel 12. Accordingly, in this case, the processor 11 does not operate the vibrator 14 and thus does not generate a vibration. Specifically, when a finger is rapidly released from the touch panel 12, the second vibration described above is not generated.

In contrast, as illustrated in FIG. 4, when the absolute value |PS| is less than the absolute value |PS1| at the time point T1, the processor 11 determines that a touch is being performed on the touch panel 12 at the time T1 due to a sluggish release of a finger from the touch panel 12. Accordingly, in this case, the processor 11 operates the vibrator 14 and generates a vibration. Specifically, when a finger is sluggishly released from the touch panel 12, the second vibration described above is generated.

As described above, the processor 11 determines, on the basis of the reduction rate per unit time of the pressure TS, whether a touch is being performed on the touch panel 12. When the processor 11 determines that a touch is being performed on the touch panel 12, the processor 11 operates the vibrator 14, whereas, when the processor 11 determines that a touch is not being performed on the touch panel 12, the processor 11 does not operate the vibrator 14.

When a finger is rapidly released from the touch panel 12, there is a high possibility that the finger is released from the touch panel 12 at the time point T1. In contrast, when a finger is sluggishly released from the touch panel 12, there is a high possibility that the finger touches the touch panel 12 at the time point T1. Consequently, as described above, because the processor 11 controls a vibration of the vibrator 14 in accordance with the presence or absence of a touch that has been determined on the basis of the reduction rate per unit time of the pressure TS, the second vibration can be prevented from being generated after a finger has been released from the touch panel 12.

### <Process performed by the mobile terminal>

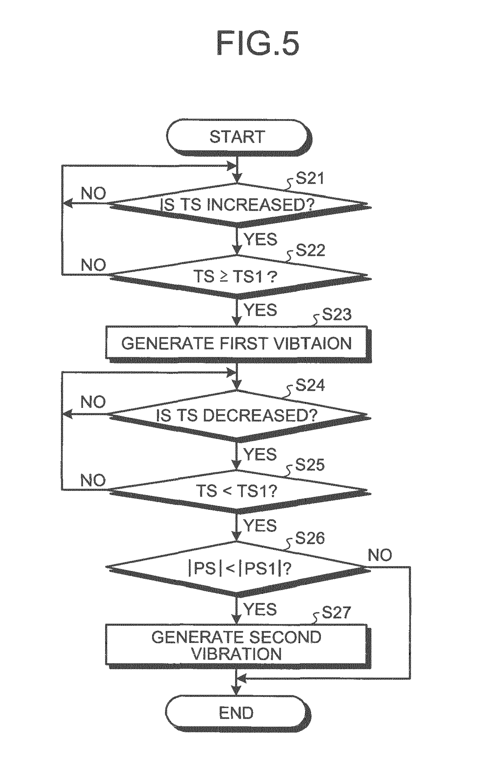

FIG. 5 is a flowchart illustrating the flow of a process performed by the mobile terminal according to the first embodiment. At the same time as the series of processes illustrated in the flowchart, the pressure sensor 13 monitors the pressure applied to the touch panel 12 and then sequentially outputs the detected pressure to the processor 11.

First, the processor 11 determines whether the pressure TS is increased (Step S21). When it is determined that the pressure TS is not increased (No at Step S21), the processor 11 repeatedly performs the determination at Step S21.

When it is determined that the pressure TS is increased (Yes at Step S21), the processor 11 determines whether the current pressure TS is equal to or greater than the threshold TS1 (Step S22). When the current pressure TS is less than the threshold TS1 (No at Step S22), the process returns to Step S21.

Then, at the time point at which the current pressure TS becomes equal to or greater than the threshold TS1 due to an increase in the pressure TS (Yes at Step S22), the processor 11 operates the vibrator 14 and generates the first vibration (Step S23).

Then, the processor 11 determines whether the pressure TS is decreased (Step S24). When the pressure TS is not decreased (No at Step S24), the processor 11 repeatedly performs the determination at Step S24.

When the pressure TS is decreased (Yes at Step S24), the processor 11 determines whether the current pressure TS is less than the threshold TS1 (Step S25). When the current pressure TS is equal to or greater than the threshold TS1 (No at Step S25), the process returns to Step S24.

Then, at the time point at which the current pressure TS is less than the threshold TS1 due to a decrease in the pressure TS (Yes at Step S25), the processor 11 determines whether the absolute value |PS| of the differential coefficient PS is less than the absolute value |PS1| of the threshold PS1 (Step S26).

When the absolute value |PS| is less than the absolute value |PS1| (Yes at Step S26), the processor 11 operates the vibrator 14 and generates the second vibration (Step S27).

In contrast, when the absolute value |PS| is equal to or greater than the absolute value |PS1| (No at Step S26), the processor 11 does not perform the process at Step S27. Specifically, when the absolute value |PS| is equal to or greater than the absolute value |PS1| (No at Step S26), the processor 11 neither operates the vibrator 14 and nor generates the second vibration.

As described above, in the first embodiment, the mobile terminal 10 includes the touch panel 12, the pressure sensor 13 that detects pressure applied to the touch panel 12, the vibrator 14, and the processor 11. On the basis of the reduction rate per unit time of the pressure TS, the processor 11 determines whether a touch is being performed on the touch panel 12. Then, at the time point at which the pressure TS becomes less than the threshold TS1 during a decrease in the pressure TS, when the processor 11 determines that a touch is being performed on the touch panel 12, the processor 11 operates the vibrator 14. Specifically, at the time point at which the pressure TS becomes less than the threshold TS1 during a decrease in the pressure TS, when the processor 11 determines that a touch is not being performed on the touch panel 12, the processor 11 does not operate the vibrator 14.

Consequently, because the second vibration can be prevented from being generated after a finger has been released from the touch panel 12, it is possible to give a user an operation feeling with less discomfort compared with the operation feeling of button keys at the time of the touch panel operation.

### [b] Second Embodiment

### <Operation of the mobile terminal>

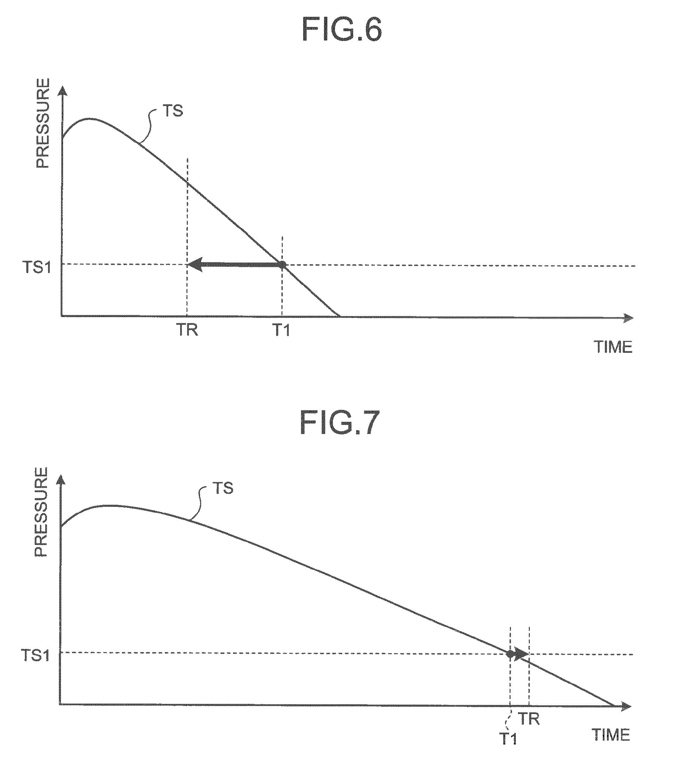

FIGS. 6 and 7 are schematic diagrams each illustrating the operation of a mobile terminal according to a second embodiment. FIG. 6 illustrates, similarly to FIG. 3, the operation of a case in which a user's finger is rapidly released from the touch panel 12 at high speed. FIG. 7 illustrates, similarly to FIG. 4, the operation of a case in which a user's finger is sluggishly released from the touch panel 12 at low speed.

As illustrated in FIGS. 6 and 7, the pressure sensor 13 monitors the pressure applied to the touch panel 12; detects the pressure TS that is decreased in accordance with the release of the finger from the touch panel 12; and outputs the detection result to the processor 11. Furthermore, the touch sensor 12-2 detects a touch performed on the touch panel 12. When the touch sensor 12-2 detects a touch, the touch sensor 12-2 outputs the coordinates that indicate the position of the touch to the processor 11. In contrast, when the touch sensor 12-2 does not detect a touch, the touch sensor 12-2 does not output the coordinates that indicate the position of the touch to the processor 11. Accordingly, on the basis of the presence or absence of the coordinates input from the touch sensor 12-2, i.e., on the basis of the detection result performed by the touch sensor 12-2, the processor 11 determines whether a touch is being performed on the touch panel 12. At the time point at which no input of coordinates is received from the touch sensor 12-2, the processor 11 determines that the touch has been released from the touch panel 12, i.e., determines that a finger is released from the touch panel 12. In FIGS. 6 and 7, the time point at which a touch performed on the touch panel 12 is released is indicated by "TR". Then, at the time point T1 at which the pressure TS is less than the threshold TS1 during a decrease in the pressure TS, the processor 11 determines whether a touch performed on the touch panel 12 has been released by the time point T1.

When a finger is rapidly released from the touch panel 12, in general, the touch performed on the touch panel 12 has already been released at the time point before the time point T1. Accordingly, as illustrated in FIG. 6, when the time point TR is present before the time point T1, the processor 11 neither operates the vibrator 14 nor generates a vibration. Specifically, when a finger is rapidly released from the touch panel 12, the second vibration described above is not generated.

In contrast, when a finger is sluggishly released from the touch panel 12, in general, the touch performed on the touch panel 12 has not yet been released at the time point T1. Specifically, the time point TR arrives after the time point T1. Accordingly, as illustrated in FIG. 7, when the time point TR is not present by the time point T1, i.e., the touch is still being performed on the touch panel 12 at the time point T1, the processor 11 operates the vibrator 14 to generate a vibration. Specifically, when a finger is sluggishly released from the touch panel 12, the second vibration described above is generated.

As described above, on the basis of the detection result obtained by the touch sensor 12-2, the processor 11 determines whether a touch is being performed on the touch panel 12. When the processor 11 determines that the touch is being performed on the touch panel, the processor 11 operates the vibrator 14, whereas, when the processor 11 determines that the touch is not being performed on the touch panel, the processor 11 does not operate the vibrator 14.

When a finger is rapidly released from the touch panel 12, there is a high possibility that the finger has already been released from the touch panel 12 by the time point T1. In contrast, when a finger is sluggishly released from the touch panel 12, there is a high possibility that, at the time point T1, the finger still touches the touch panel 12. Accordingly, as described above, because the presence or absence of vibration of the vibrator 14 is controlled in accordance with the presence or absence of touch determined on the basis of the detection result obtained by the touch sensor 12-2, the second vibration described above can be prevented from being generated after a finger is released from the touch panel 12.

### <Process performed by the mobile terminal>

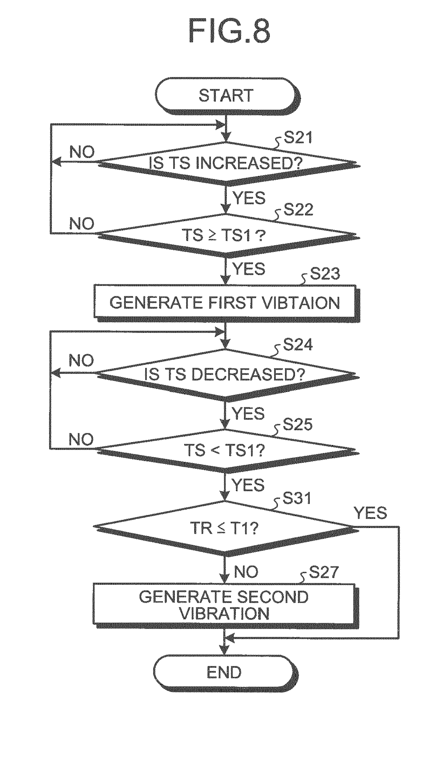

FIG. 8 is a flowchart illustrating the flow of a process performed by the mobile terminal according to the second embodiment. At the same time as the series of processes illustrated in the flowchart, the pressure sensor 13 monitors the pressure applied to the touch panel 12 and then sequentially outputs the detected pressure to the processor 11. The processes performed at Steps S21 to S25 illustrated in FIG. 8 are the same as those illustrated in FIG. 5; therefore, descriptions thereof will be omitted.

At the time point at which the current pressure TS becomes less than the threshold TS1 due to a decrease in the pressure TS (Yes at Step S25), the processor 11 determines whether a touch is released. Specifically, the processor 11 determines whether the time point TR is present before the time point T1 (Step S31).

Then, at the time point at which the current pressure TS becomes less than the threshold TS1, when a touch has already been released, i.e., when the status is represented by "TR≤T1" (Yes at Step S31), the processor 11 neither operates the vibrator 14 nor generates the second vibration.

In contrast, at the time point at which the current pressure TS becomes less than the threshold TS1, a touch has not yet been released, i.e., the status is not represented by "TR≤T1" (No at Step S31), the processor 11 operates the vibrator 14 and generates the second vibration (Step S27).

As described above, in the second embodiment, on the basis of the detection result obtained by the touch sensor 12-2 that detects a touch performed on the touch panel 12, the processor 11 determines whether touch is being performed on the touch panel 12. When the processor 11 determines that the touch is still being performed on the touch panel 12 at the time point at which the pressure TS becomes less than the threshold TS1 during a decrease in the pressure TS, the processor 11 operates the vibrator 14. Specifically, when the processor 11 determines that a touch is not being performed on the touch panel 12 at the time point at which the pressure TS becomes less than the threshold TS1 during a decrease in the pressure TS, the processor 11 does not operate the vibrator 14.

Consequently, because the second vibration can be prevented from being generated after a finger has been released from the touch panel 12, it is possible to give a user an operation feeling with less discomfort compared with the operation feeling of button keys at the time of the touch panel operation.

### [c] Another embodiment

[1] Each of the processes performed by the mobile terminal 10 described above may also be implemented by allowing the processor 11 to execute a control program associated with each of the processes. For example, the control program associated with each of the processes described above may be stored in the memory 15. Then, the control programs may be read from the memory 15 by the processor 11 and then implemented by the processor 11.
[2] In each of the embodiments described above, as the threshold of the pressure, the same threshold TS1 is used for both the first vibration and the second vibration. However, as a threshold of pressure, a threshold that is used for the first vibration may also be greater than that used for the second vibration. Consequently, for the pressing amount of the touch panel 12, the pressing amount of the first vibration when it is generated can be greater than the pressing amount of the second vibration when it is generated.

According to an aspect of an embodiment of the present invention, an advantage is provided in that, it is possible to give a user an operation feeling of a touch panel with less discomfort compared with the operation feeling of button keys at the time of the touch panel operation.

## Claims

1. An electronic device (10) comprising:
a touch panel (12);
a pressure sensor (13) that detects pressure applied to the touch panel (12);
a vibrator (14); and
a processor (11), wherein
at the time point at which the pressure becomes less than a threshold during a decrease in the pressure, the processor (11) operates the vibrator (14) when the processor (11) determines that a touch is being performed on the touch panel (12), and the processor (11) does not operate the vibrator (14) when the processor (11) determines that a touch is not being performed on the touch panel (12).

2. The electronic device (10) according to claim 1, wherein, on the basis of the reduction rate per unit time of the pressure, the processor (11) determines whether the touch is being performed on the touch panel (12).

3. The electronic device (10) according to claim 1 or 2, wherein
the touch panel (12) includes a touch sensor (12-2) that detects a touch that is performed on the touch panel (12), and
the processor (11) determines, on the basis of detection result obtained by the touch sensor (12-2), whether the touch is being performed on the touch panel (12).

4. A control program used by an electronic device (10) that includes a touch panel (12), a pressure sensor (13) that detects pressure applied to the touch panel (12), a vibrator (14), and a processor (11), the control program causing the processor (11) to execute a process comprising:
monitoring the pressure; and
at the time point at which the pressure becomes less than a threshold during a decrease in the pressure, operating the vibrator (13) when it is determined that a touch is being performed on the touch panel (12), and not operating the vibrator (13) when it is determined that a touch is not being performed on the touch panel (12).
